# EUROPEAN PATENT SPECIFICATION

(11) **EP 2 573 397 B1**
(45) Date of publication and mention of the grant of the patent: **27.11.2019**
(21) Application number: 11783105.7
(22) Date of filing: 18.05.2011
(51) Int. Cl.: F04B 43/073

(54) **DOUBLE-MEMBRANE CENTRAL-FLOW PUMP**
ZENTRALFLUSSPUMPE MIT DOPPELMEMBRAN
POMPE À DOUBLE MEMBRANE À FLUX CENTRAL

(30) Priority: 18.05.2010 ES 201000633
(43) Date of publication of application: 27.03.2013
(73) Proprietor: Samoa Industrial S.A., 33392 - Gijón, Asturias (ES)
(72) Inventor: GONZALEZ-MORATIEL ALVAREZ, Alberto, E-28002 Madrid (ES)
(74) Representative: Fernández-Pacheco, Aurelio Fernández
(86) International application number: PCT/ES2011/000162
(87) International publication number: WO 2011/144772

(56) References cited:
- EP-A1- 0 132 913
- EP-A1- 0 132 913
- US-A- 3 849 033
- US-A- 4 381 180
- US-A- 4 381 180
- US-A1- 2004 047 749
- US-A1- 2004 047 749
- US-B1- 6 241 487
- US-B1- 6 957 952
- DATABASE WPI Derwent Publications Ltd., London, GB; AN 1990-298431, XP008163990 & DE 39 09 800 A1 (NEUHAEUSER GMBH & CO ET AL.) 27 September 1990

## Description

### THE INVENTION

The present invention is regarding a central flow double diaphragm pump controlled by an upper directional air valve module. The air valve module uses a pivoting sealing member with a protruding wing to distribute the operating fluid, that may be compressed air or another pressurized fluid, to drive the diaphragms. The pump comprises two inlet ports to and two outlet ports from the respective pumped fluid chambers in a special arrangement. These ports incorporate four check-valves (for example, but not necessarily, ball valves) also in a special arrangement. The diaphragms, that are elastomeric and may include a layer of PTFE (polytetrafluoroethylene) or other material that is inert to chemicals, have a special design and incorporate a central internal disc. The shaft of the pump, between the two diaphragms, may reciprocate freely and is not fastened to the diaphragms. Compared to existing similar flow rate pumps, when pumping the same volume of fluid during the same time, the present invention uses up to a third less volume of operating fluid with a corresponding reduction in energy consumption.

### APPLICATION OF THE INVENTION

This invention may be used in industrial pumping applications, to pump fluids and/ or fluids with solids in suspension and/ or powders and/ or chemically aggressive or difficult to handle fluids such as hydrocarbons, chlorinated hydrocarbons, acids, bases, and other chemicals used in industrial processes.

### INVENTION BACKGROUND

There are many double diaphragm pumps in the market that may be operated by compressed air or other pressurized fluid, generally these pumps may be classified into two sets:
a) Peripheral flow pumps that alternatively pump fluid from two fluid chambers positioned at the two outermost sides of the pump. Operating fluid chambers are separated by diaphragms from the pumped fluid chambers and these operating fluid chambers are on the inside of the diaphragms.
b) Central flow pumps that alternatively pump fluid from two fluid chambers positioned at either side of the central pump body. Operating fluid chambers are separated by diaphragms from the pumped fluid chambers and these operating fluid chambers are on the outside of the diaphragms.

Advantages of diaphragm pumps compared with other pump technologies include:
- Versatility to pump a wide range of difficult to pump fluids due to, for example, being chemically aggressive or abrasive.
- Take advantage of the operating fluid pressure, for example compressed air, to allow medium pressure fluids to be pumped and also for the control and operation of the pump.
- Their design does not require the sealing systems used in rotary shaft pumps and that may leak.

Peripheral flow diaphragm pumps are the most common kind of compressed air operated diaphragm pumps. The design of these pumps implies that the pumped fluid has to pass initially through an inlet manifold that includes one, or in most cases two, ninety degree elbows. After passing through this manifold the fluid has to enter into the fluid chambers from where it is discharged through a further manifold that also includes one, and in most cases two, ninety degree elbows. So, this design introduces pressure drops, an important factor in the low energy efficiency of these pumps.

The fluid path in a central flow pump does not circulate around the outside of the pump, so avoiding the associated pressure drops and improving the pump's efficiency. However, in most cases the design of the inlets and outlets towards and from the valves of the pumping chambers involves a complicated path. Also, ducts exist between the suction valves and the chamber inlet ports and between the chamber outlet ports and the discharge valves. The design of a pump that optimizes or eliminates these ducts would offer efficiency improvement.

Both peripheral flow pumps and central flow pumps use a directional valve to switch the flow of the operating fluid from one air chamber to the other. The switching time required causes a more or less pulsating flow. In a pumping system it is better to avoid pulsating flow for various reasons, for example to avoid: losses of efficiency, vibrations in the installation, irregular fluid supply, and loss of dosing accuracy.

Regarding the overall pumping performance, the suction pressure that is available to the pump is: suction pressure = (atmospheric pressure + fluid static pressure at the inlet) - (suction pressure that the pump is capable to generate). For this reason, any improvement in the suction capacity of the pump is of great value (an improvement of 0.1 bar in the discharge performance = approximately 0.1 bar over 5 bar of discharge pressure = "only" 2% of improvement, but an improvement of 0.1 bar in the suction performance = approximately 0.1 bar over 1 bar of suction height = 10% improvement).

The diaphragms and check valves are essential components in all diaphragm pumps. Since they are in contact with the pumped fluid, they are available in different materials in order to maximize the pumps' range of application. Normally the diaphragms are fastened to the pump's central shaft using threaded connections and large discs, or pistons, that act on both the inside and outside of the diaphragms, to transmit the alternating driving forces to both diaphragms.

A significant factor during the working life of diaphragm pumps is the cost of maintenance. And important factors in this cost include: the cost to replace components at the end of their life (for example: diaphragms, check valves, directional valve and shaft), the labour time to service or substitute parts, and the downtime. Factors that reduce maintenance intervals are:
- Diaphragms for chemically aggressive fluids, especially those with a design to achieve high chemical resistance not based only on elastomers, for example using PTFE, tend to rupture early due to the alternating movement during each cycle and the longer the stroke the shorter the life of such diaphragms.
- The accumulation of sediments in the pump fluid chambers can lead to wear of the diaphragms and shaft when the diaphragms are forced, due to contact with these deposits, to deform to finish their stroke.
- Forces on the shaft and diaphragms when pumping against significant suction or discharge resistance.
- Pumped fluids with solids in suspension cause increased wear of the diaphragms and check valves.
- Contaminated compressed air can cause premature wear of the air valve.

Significant factors that increase the downtime and the labour time required to service or replace parts are:
- The need to disconnect the pump from the fluid lines, when to access components requiring service or replacement, the inlet and outlet manifolds of the pump need to be disassembled.
- The need to disassemble the pump to access the components requiring service or replacement due to a design that does not facilitate access to these parts.
- When the pumped fluid is a dangerous fluid, then the disconnection of the fluid lines and the maintenance has to be realized with particular care to avoid spills and operator contact with the fluid.

Should it be possible to increase the velocity of the stroke direction change over in a diaphragm pump and increase the cycling frequency, then this would reduce the negative effects of the fluid pulsations and it would be possible to reduce the stroke length, without reducing the flow rate, (flow rate = cycle frequency x volume pumped per cycle), and so increase diaphragm life. However, this requires a faster directional valve. Many designs of directional valves have evolved to reduce problems such as air leaks and/or poor operating reliability for pump starting and stopping. However, to reduce the air leaks, seals and lubricants are used that, unfortunately, may become contaminated and cause directional valve sticking and this can lead to pump start-up failures or undesired pump stopping. It is essential that a new directional valve does not leak air and delivers reliable pump start-up and running.

Various central flow pumps exist with the characteristics previously mentioned, for example:
- P- US 4381180 refers to a diaphragm pump in which the fluid flows outwards, so it does not have a central flow like Samoa pump, in which the pumped fluid flows through the central part of the pump. This patent drive air motor is a slide valve not a pivot valve with low friction pivot as Samoa's pump.
- P- US 2004/047749 is for a slide valve (SLIDE VALVE), Samoa pump does not use a slide valve, it uses a PIVOTING valve.
- EP-0132913 - special mention the pump owned by FLOTRONICS AG. Such pumps comprise two chambers and four check valves, and a shaft that pushes the diaphragms. However, no pumps are known that incorporate all of the characteristics of the present invention comprising:
- Check valves located in the centre of the pump that are accessible from above, with the suction valves at a different level than the discharge valves.
- Fluid inlet ports to the chambers located above the shaft and within the chamber and fluid outlet ports from the chambers located below the shaft and within the chamber.
- A pivoting sealing member to distribute the air whose special protruding wing breaks the symmetrical functioning of the pump and so prevents the pivoting sealing member, and as a consequence prevents the pump, from stopping.
- A special diaphragm design.
- Diaphragms assembled freely without any fastening to the shaft.
Consequently, no pump is known that offers simultaneously all the innovations described and the functional advantages of the present invention.

### DESCRIPTION OF THE INVENTION

The following terminology is used:
- AIR / COMPRESSED AIR = compressed air or any other pressurized operating fluid.
- FLUID = pumped fluid that could be a liquid, a liquid with particles in suspension or air with particles in suspension.
- AIR DISTRIBUTION MODULE = topside module that distributes compressed air, using a low friction pivoting sealing member with a protruding wing.
- PIVOT VALVE = pivoting sealing member with a protruding wing.
- BALL VALVES = two suction valves and two discharge valves that in the present invention are presented as ball valves, but which could be flap, or flat or any other kind of check valves.

The present invention is a special design of double diaphragm pump that, compared to similar flow rate pumps, when pumping the same volume of fluid, uses up to a third less volume of compressed air with a corresponding reduction in energy consumption. This pump eliminates air leaks, starts up reliably without stopping or stalling, delivers a less pulsing flow, and increases the operating life of the diaphragms. The cleaning and replacement of the diaphragms and the ball valves (or other type of check valves) is possible directly, simply and quickly, since there is no need to disconnect the fluid lines nor disassemble completely the pump. Consequently, thanks to the reduced time required, such maintenance is much more economical.

The present invention comprises a specially configured central flow double diaphragm pump with a fluid inlet manifold (16) a fluid outlet manifold (17), and two external lateral chambers (1 and 2) that each comprise an air chamber (1.1 and 2.1) and a fluid chamber (1.2 and 2.2), and a central body located between these chambers (3). Each lateral chamber includes a diaphragm (4) that separates the air chambers (1.1 and 2.1) from the fluid chambers (1.2 and 2.2). The air chambers are on the outermost sides and are further enclosed by a chamber cover (14). The air chambers are operated by compressed air, or a different pressurized operating fluid. The compressed air is controlled by a pivoting sealing member with a protruding wing so that the diaphragms are alternatively displaced by the compressed air. The central shaft (6) is displaced and the centre of the diaphragms contact their respective end of stroke sensor (5). Hence, an alternating to and fro movement is produced sucking fluid into and discharging fluid from the wetted side of each chamber.

### More specifically, the present invention comprises:

### 1.-Regarding the control and operating system:

- LOW FRICTION PIVOTING SEALING MEMBER WITH A PROTRUDING WING (8). A pivoting sealing member with a protruding wing is included in the operating fluid distribution module (7). The pivoting sealing member (8) includes an inlet sealing cylinder with a sealing lip (8.1) for each of the two inlets, a protrusion with a truncated spherical surface (8.2), an outlet sealing cylinder with a sealing lip (8.4) for each of the two outlets and a protruding wing (8.5) whose tip faces the incoming operating fluid flow. The protrusion (8.2), is supported by, pivots against and seals against the distribution module's low friction seal (8.3). The pivoting sealing member moves freely around its truncated spherical protrusion with minimal friction, this enables a very high velocity change of position. The seal between the truncated spherical protrusion and the low friction seal prevents operating fluid leaks and hence unnecessary energy use. For example, when the pump is controlled using a valve in the pumped fluid discharge line, it is possible to leave the pump with pressurized operating fluid and pumped fluid without any operating fluid leak and without any movement.
- THROTTLE VALVE (9). A throttle valve is included in only one of the operating fluid channels, to break the symmetrical functioning of the pump and so prevent the pump from stopping or stalling. This reinforces the functioning of the pivoting sealing member with a protruding wing (8).
- TWO SENSOR VALVES (5). A sensor valve is incorporated in each of the two chamber covers (14) and are actuated at the end of stroke of their respective diaphragms. The sensor valves comprise: a sensor chassis (5.1), a gasket (5.2), an actuating button (5.3), a ball valve seat (5.4), an o-ring seal (5.5), and a ball valve (5.6).

### 2.-Regarding the pumped fluid chambers:

The central pump body (3), that comprises the pumped fluid chambers and is also known as the wetted body, includes a special configuration of check valves, that could be ball valves or any other kind of check valves, that allows the immediate connection between the check valve housings and the suction inlet and discharge outlet ports of the pumped fluid chambers. The manifolds commonly used in air operated double diaphragm pumps, prior to the present invention, to connect between the check valves and the pumped fluid chambers, are thus not required. The suction and discharge performance is improved significantly through immediate check valve to pumped fluid chamber connections.
- FOUR VALVES, for example, ball valves. Two suction check valves (10) and two discharge check valves (11) are housed in the centre of the central body between the chambers and within the projection of the section of the diaphragms. In the case of ball valves, the valves operate with vertical movement perpendicular to the flow of fluid into and out of the pump. The two suction valves (10) are located in a horizontal plane above the two discharge valves (11). The valves connect immediately with the pumped fluid chamber inlet (12) and outlet (13) ports.
- AN INLET PORT (12) AND OUTLET PORT (13) in both of the pumped fluid chambers. The housings of the check valves form the inlet and outlet ports. The inlet ports (12) are above the central shaft (6) and the outlet ports (13) are below the central shaft. This arrangement ensures a fluid flow from the top towards the bottom and prevents zones of zero and very low flow velocity, and so prevents sedimentation in the fluid chambers of solid particles that are carried in suspension. The particles in suspension are discharged through the outlet ports (13). This increases the life of the diaphragms and the shaft, since otherwise sedimentation of particles damages the diaphragms and shaft due to wear and mechanical distortions caused by deposits of particles.

The present invention solves these existing problems caused by sedimentation, through the positioning of the pumped fluid inlet and outlet ports at different levels and within the projected section of the chambers. So, the suction inlets are at a higher level than the discharge outlets to encourage the expulsion of solids from the pump. This contrasts with existing pumps, wherein the fluid chamber suction port is towards the bottom of the chamber.

The present invention also allows the simultaneous suction of two fluids, by dividing the pumped fluid inlet manifold in two. The pumped fluid inlet manifold diverts the two pumped fluids to each inlet port of different pumped fluid chambers. The two fluids are mixed in the pumped fluid outlet manifold.
- TWO DIAPHRAGMS (4) each with a profile that fits to the profile of the two chamber covers (14) and to the external sides of the two pumped fluid chambers (1.2) and (2.2). The design of these diaphragms accomplishes two functions:
   1. The perfect fit of the diaphragms to the pumped fluid chambers ensures a leak proof seal.
   2. The diaphragms are made with an elastomer in a shape that, when the diaphragms are in their initial or relaxed state, fits to the profile of the chamber covers (14). During its discharge cycle a diaphragm stores elastic energy from the operating fluid. Then, during its suction cycle, the diaphragm releases this energy, and so assists the pump's suction cycle. During the suction cycle the suction diaphragm is also pushed by the central shaft, which acts freely from both diaphragms so that no forces are produced that would otherwise shorten the shaft's and diaphragms' life. This even applies in extreme situations, such as during cavitation, dry running, and throughout the shaft's life when, due to wear, play may be introduced into the shafts movements. The pivoting sealing member with a protruding wing allows a faster stroke direction changeover and higher frequency switching than existing shuttle valves, and so enables the diaphragms to be driven with shorter strokes. The faster stroke direction changeover reduces pulsations and shorter strokes increases diaphragm life. Minimizing pulsations also reduces flow resistance within the pump and so achieves a significant saving in energy consumption.

The present invention includes, in addition to the previously mentioned four check valves (two suction valves (10) and two discharge valves (11)), check valve access caps (15) which are all accessible from the same side of the pump, from beneath the operating fluid distribution module. The check valve access caps allow a direct and simple access to the check valves for cleaning or replacing the valves. Hence, whenever these operations should be necessary the pump downtime for maintenance can be reduced to a minimum, since it is only necessary to disassemble the operating fluid distribution module and the check valve access caps to reach the valves. So, during check valve maintenance the pump can remain connected in the fluid line; it is not necessary to disconnect the pumped fluid suction and discharge hoses.

Similarly, the design and side arrangement of the chamber covers and diaphragms allows the diaphragms to be replaced by only disassembling the chamber covers and replacing the diaphragms, which are not fastened to the shaft. Again, the pump can remain connected in the fluid line; it is not necessary to disconnect the pumped fluid suction and discharge hoses.

The possibility to replace the check valves or the diaphragms without disconnecting the pump from the fluid line is of special importance when these pumps are used to pump chemically aggressive fluids. Here not only can downtime and repair time be reduced to a minimum, but, even the health and safety risks associated with handling such fluids can be reduced. In the case of high value pumped fluids, the amount of fluid lost during maintenance can also be minimized.

### DESCRIPTION OF THE DRAWINGS

To complement this description of the present invention, and in order to communicate a better understanding of the characteristics of the invention, a set of drawings is included below. These drawings are illustrative but not restrictive.

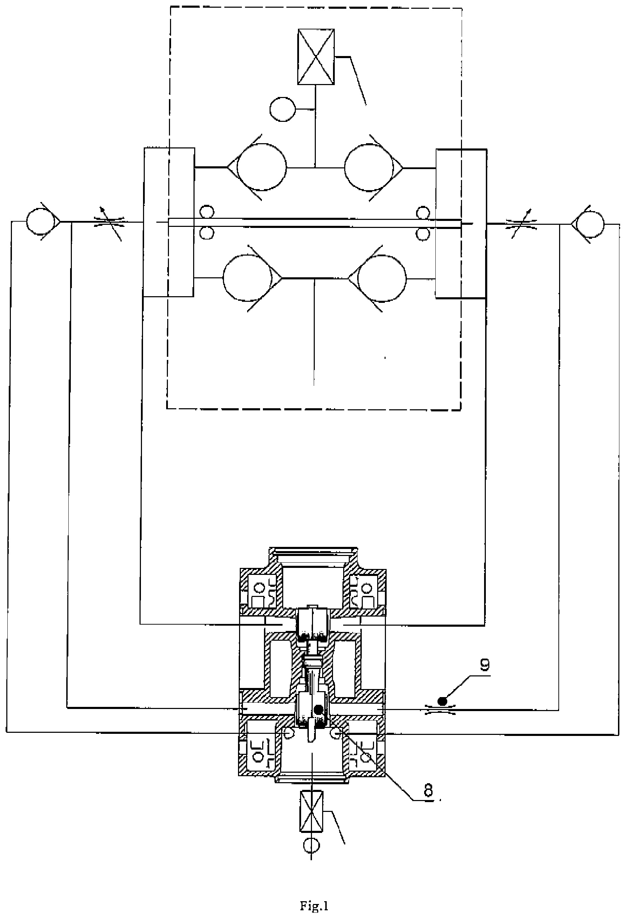

FIGURE 1, is a functional diagram of the pump.

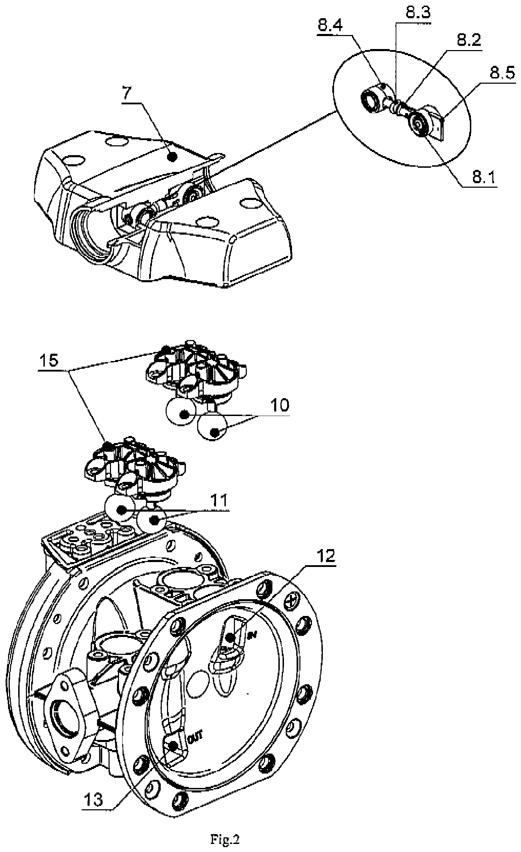

FIGURE 2, illustrates the operating fluid distribution module, the ball valves, the check valve access caps, and the central pump body, and includes a detailed view of the pivoting sealing member.

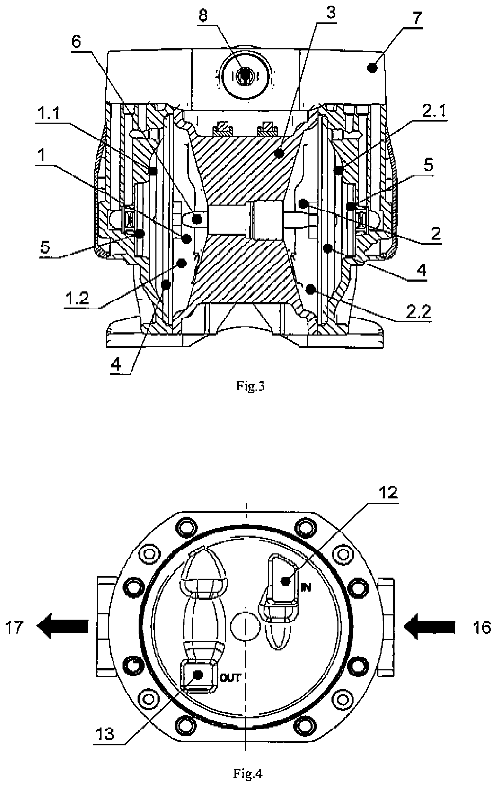

FIGURE 3, is a section of the front view of the pump.
FIGURE 4, is a side view of the central pump body, including the pumped fluid chamber inlet and outlet ports.

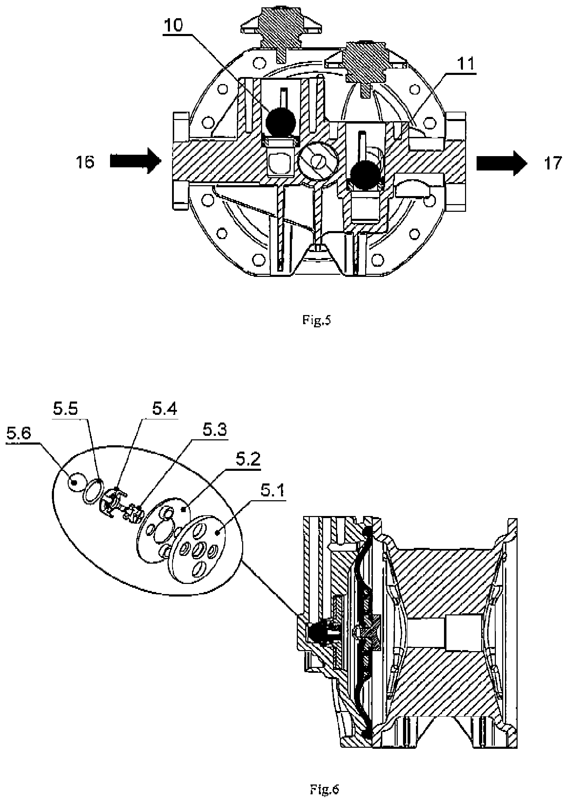

FIGURE 5, is a section of the side view of the pump, including the position of the ball valves.
FIGURE 6, is a detailed section of a partial front view of the pump, including a sensor valve and a detailed exploded view of a sensor valve.

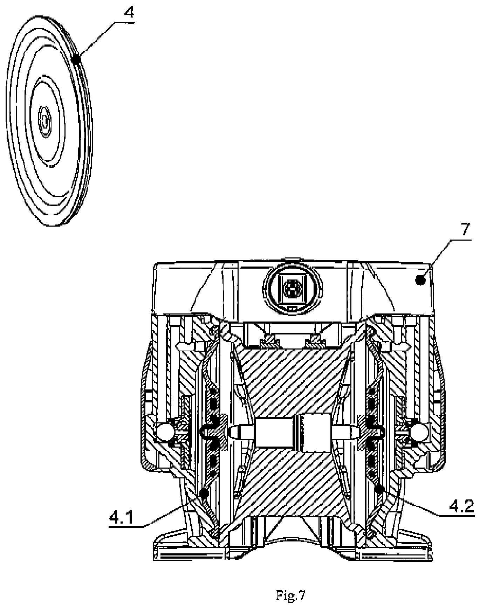

FIGURE 7, is a section of the front view of the pump, where the left diaphragm (4.1) is returning to its relaxed state and the right diaphragm (4.2) is moving under operating fluid pressure and a detailed view of a diaphragm.

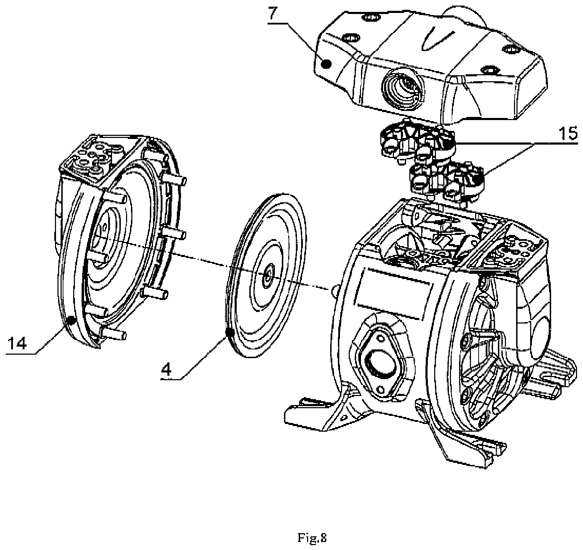

FIGURE 8, illustrates the direct access to the diaphragms by removing the chamber covers (14). Also, the direct access to the check valves, by removing the operating fluid distribution module from the topside and the check valve access caps (15), is illustrated in this figure and also in Figure 2.

### PREFERRED EMBODIMENT OF THE INVENTION

The pump functions through the interaction of its following sub-systems and components:
- In the control and operating sub-system:
   - Operating fluid distribution module (7) with a pivoting sealing member with a protruding wing (8)
   - Operating fluid channels with a throttle valve (9)
   - End of stroke sensor valves (5)
- In the pumped fluid sub-system:
   - Diaphragms (4)
   - Shaft (6)
   - Check valves, for example, but not necessarily, ball valves (10), (11)
   - Wetted body of the pump with pumped fluid inlet (12) and outlet (13) ports.
   - Wetted body of the pump with pumped fluid inlet manifold (16) and outlet manifold (17)

When the operating fluid line connected to the operating fluid distribution module is pressurized, the pivoting sealing member with a protruding wing (8) directs the flow of operating fluid towards one of the operating fluid chambers (1.1) formed between the corresponding diaphragm (4) and chamber cover (14). Then, the diaphragm, pressurized by the operating fluid acting on one of its sides, starts to move towards the centre of the pump and as a consequence of this movement:
a) The diaphragm of the chamber (1.1) pressurized by the operating fluid starts to pressurize the pumped fluid in the adjacent fluid chamber (1.2). The pumped fluid is discharged via the chamber outlet port (13) whose check valve (for example, but not necessarily a ball valve (11)) is opened. This valve allows the pumped fluid to be discharged from the pump, but prevents the pumped fluid flowing in the opposite direction into the pump. The position of the pumped fluid chamber outlet port, below the shaft of the pump, facilitates the discharge from the chamber (1.2) of any solid particles that may be in suspension in the pumped fluid.
b) Meanwhile, the other diaphragm's stroke follows a contrary path: the fluid chamber (2.2) starts its suction cycle, opening the check valve (for example, but not necessarily, a ball valve) of the chamber inlet port (12) whilst the check valve of the chamber outlet port (13) is closed. The fluid connected to the pumped fluid inlet manifold starts to flow into the chamber. This diaphragm moves to release its elastic energy, stored during the prior deformation of the diaphragm, and due to the diaphragm in the other chamber, which is pressurized by the operating fluid, pushing against the shaft that is located between the two diaphragms.
c) During the above functioning sequences the sensor valves (5) remain closed, until the diaphragm opposite to the pressurized operating fluid chamber reaches its end of stroke and actuates its corresponding sensor valve (5).

Once the sensor valve (5) has been actuated (opened) another series of actions are triggered that affect the pivoting sealing member with a protruding wing (8) that controls the pump. When the sensor valve (5) is actuated it sends operating fluid to the inlet sealing cylinder of the pivoting sealing member (8) via the operating fluid manifold in the chamber cover. This operating fluid impulse causes the pivoting sealing member with a protruding wing (8) to change position. In its new position, the pivoting sealing member allows the operating fluid chamber (1.1) that was pressurized to exhaust to ambient, and allows operating fluid to enter and pressurize the other operating fluid chamber (2.1). The change of position of the pivoting sealing member is ensured by the protruding wing which is chamfered on one side to cause the pivoting sealing member to be forced towards one side and also is reinforced by the throttle valve (9) breaking the symmetrical functioning of the pump to prevent the pump stopping or stalling. Without the protruding wing of the pivoting sealing member and the throttle valve the pump would stop every time that the pivoting sealing member would reach a balanced position and would require an external action to start the pump up again.

At this point the stroke of the pump starts again, in the opposite direction, and in a similar way to the initial stroke explained above completes the pump's pumping cycle. These cycles are very fast and completed several time per second.

In this way, the pumped fluid chambers contained by the diaphragms alternatively suck and discharge the pumped fluid with a cycle frequency above the frequency of existing diaphragm pumps so allowing a continuous, less pulsating flow than existing diaphragm pumps to be delivered to the pump outlet.

The special design of the pump allows the diaphragms (4) and check valves (for example, but not necessarily ball valves (10) and (11)) to be replaced without disconnecting the pump from the fluid line. It is only necessary to disassemble the operating fluid distribution module (7) and remove the check valve access caps (15) to reach the check valves or remove the chamber covers (14) to replace the diaphragms that are not fastened in any way.

## Claims

1. A central flow double diaphragm pump using as an energy source, a pressurized operating fluid flows through the central part, and including two external lateral chambers (1,2), each chamber including a diaphragm (4) separating an outer operating fluid chamber (1.1 , 2.1) from an inner pumped fluid chamber (1.2, 2.2), the pump comprising: a central pump body (3) comprising: two concave sides each delimiting an inner side of the respective pumped fluid chambers; an inlet manifold (16), as an integral part of the central pump body (3), for introducing fluid to the pump; an outlet manifold (17), as an integral part of the central pump body, for discharging fluid from the pump; a shaft, within a bushing, running between the centers of the central pump body's concave sides; two pumped fluid inlet ports (12) and two pumped fluid outlet ports (13) one of each within each of the two pumped fluid chambers, the inlet ports being at a different height than the outlet ports, the inlet ports being above the inlet manifold and the outlet ports being below the outlet manifold; two suction check valve (10) housings between the pumped fluid chambers, each including a suction check valve, the suction check valves being above the shaft (6), and with the inlet manifold being connected to the inlet of each suction check valve housing and with an immediate connection from the outlet of each suction check valve housing to the respective pumped fluid inlet port, and two discharge check valve (11) housings between the pumped fluid chambers, each including a discharge check valve, the discharge check valves being below the shaft, and with an immediate connection from each pumped fluid outlet port to the inlet of the respective discharge check valve housing and with the outlet of each of the discharge check valve housings being connected to the outlet manifold; two check valve access caps (15) the valves being independent of: the connections between the inlet manifold and the suction check valve housings and the connections between the discharge check valve housings and the outlet manifold, and the connections between the pumped fluid inlet ports and the suction check valve housings and the connections between the suction check valve housings and the pumped fluid outlet ports; two chamber covers each delimiting an outer side of the respective operating fluid chambers and each fastened to the central pump body independently of the other chamber cover (14), independently of the inlet manifold and independently of the outlet manifold, wherein each chamber cover comprises: an operating fluid manifold communicating the operating fluid between an operating fluid distribution module (7) and the respective operating fluid chamber; a throttle valve (9) disposed in an inlet, the inlet guiding flow into one of the operating fluid manifolds from the fluid distribution module, and a sensor valve (5) configured to detect an end of stroke position of the respective diaphragm when it reaches its outermost position and to send at the end of stroke an operating fluid impulse to the distribution module via the respective operating fluid manifold; the operating fluid distribution module being disposed above the central pump body, connected to both of the chamber covers, and including a pivoting sealing member (8), the pivoting sealing member rotating, in a horizontal plane, alternatively in a clockwise and anticlockwise direction, at a location of a flow of operating fluid into the operating fluid distribution module, and the pivoting sealing member comprising; a protruding wing (8.5); an inlet sealing cylinder with a circular sealing lip (8.1) on each of the two circular sides of the cylinder configured to control the communication of the operating fluid between the operating fluid distribution module and alternatively, via the respective chamber cover operating fluid manifolds, each of the operating fluid chambers and a protrusion (8.2) with a truncated spherical surface being supported by, pivoting against and sealing against a low friction seal (8.3) housed in the center of the operating fluid distribution module, and two diaphragms each comprising: an undulating profile that fits the profile of the chamber covers as the diaphragms are completing a suction stroke towards the chamber covers, and that fits the concave sides of the central pump body as the diaphragms are completing a discharge stroke towards the central pump body, and a flange sealing bead preventing pumped fluid and operating fluid leaking between the chamber covers and the central pump body.

2. The pump of claim 1, wherein the operating fluid distribution module comprises: an operating fluid inlet cavity comprising two operating fluid inlet ports one on either side of the operating fluid inlet cavity, and an operating fluid outlet cavity comprising two operating fluid outlet ports on either side of the operating fluid outlet cavity, and wherein the pivoting sealing member of the operating fluid distribution module is a low friction pivoting sealing member, wherein the protruding wing of the pivoting sealing member includes a tip facing the flow of the operating fluid into the operating fluid inlet cavity, the tip having a chamfer on one long side of a rectangular section thereof facing the flow of operating fluid such that when operating fluid flows into the operating fluid inlet cavity the pivoting sealing member is not balanced in a central position within the operating fluid distribution module; wherein the sealing lip on each circular side of the inlet sealing cylinder of the pivoting sealing member is configured to permit the passage of operating fluid into one of the operating fluid inlet ports whilst sealing closed the other inlet port; wherein the protrusion of the pivoting sealing member seals against the low friction seal located in the center of the operating fluid distribution module such that the operating fluid is prevented from flowing directly from the operating fluid inlet cavity into the operating fluid outlet cavity, and wherein the pivoting sealing member further comprises an outlet sealing cylinder with a sealing lip on each circular side of the outlet sealing cylinder configured to permit the passage of operating fluid out of one of the operating fluid outlet ports whilst sealing closed the other outlet port.

3. The pump of claim 1, wherein the sensor valve comprises: a sensor chassis; a gasket; an actuating button; a ball valve seat; an o-ring seal, and a ball valve, and one of the chamber covers includes a throttle valve in one channel of its operating fluid manifold leading from the corresponding operating fluid inlet port of the operating fluid distribution module to the corresponding operating fluid chamber wherein the operating fluid distribution module, the chamber cover operating fluid manifolds and the sensor valves are configured to allow the pressurized operating fluid to act constantly on the sensor valves; each sensor valve is configured to open when the diaphragm on the same side of the pump as the sensor valve reaches its end of stroke towards the sensor valve; each sensor valve, and the chamber cover operating fluid manifold in the chamber cover including the sensor valve, and the operating fluid distribution module, are configured to allow the operating fluid to flow, when the sensor valve is opened, from the sensor valve, through the chamber cover operating fluid manifold, and to the operating fluid distribution module to apply an impulse force to the side of the inlet sealing cylinder on the same side of the pump as the sensor valve, to cause the pivoting sealing member to change position; and the throttle valve is configured to reinforce the functioning of the pivoting sealing member by breaking a symmetrical functioning of the pump and so prevent the pivoting sealing member and hence the pump from stopping or stalling.

4. The pump of claim 1, wherein the two suction check valve housings and the two discharge check valve housings include housing openings in the upper ends of the check valve housings and one removable access cap closes and seals the two suction check valve housing openings and a second removable access cap closes and seals the two discharge check valve housing openings.

5. The pump of claim 1, wherein within each pumped fluid chamber the pumped fluid chamber inlet port is above the shaft towards the upper periphery of the fluid chamber, and the outlet port is below the shaft outlet manifold and towards the lower periphery of the fluid chamber and the inlet port and outlet port are diagonally opposite from one another to ensure a fluid flow from the top towards the bottom and out of the chambers, thus eliminating zones of zero and very low flow velocity where sedimentation could otherwise occur in the pumped fluid chambers.

6. The pump of claim 1, wherein the housings of the four check valves form, in the case of the suction valves, the pumped fluid chamber inlet ports located above the shaft and form, in the case of the discharge valves, the pumped fluid chamber outlet ports located below the shaft, so eliminating the need for manifolds between the check valves and the pumped fluid chamber inlet and outlet ports.

7. The pump of claim 1, wherein the two suction check valve housings and the two discharge check valve housings comprise housing openings in the upper ends of the check valve housings; one removable access cap closes and seals the two suction check valve housing openings and a second removable access cap closes and seals the two discharge check valve housing openings, and the access caps are independent of the connections between the inlet and outlet manifolds and the check valve housings and are independent of the connections between the pumped fluid inlet and outlet ports and the check valve housings, to permit access to the check valve housings and the check valves without disconnecting either the inlet or the outlet manifold from hoses or pipes connecting to the pump and without disassembling either the inlet or the outlet manifold from the pump.

8. The pump of claim 1, comprising two independent suction inlets, one suction inlet connecting to each of the two pumped fluid chambers.

9. The pump of claim 1, wherein the diaphragms are elastic diaphragms and are not fastened to the shaft and wherein each diaphragm is configured such that the diaphragm is in a relaxed state at the end of a suction stroke and the diaphragm stores elastic energy during its deformation during a discharge stroke and the diaphragm assists a suction stroke by returning the elastic energy during the suction stroke.

10. The pump of claim 1, wherein the chamber covers, are independent of the inlet and outlet manifolds.

11. The pump of claim 1, wherein an automatic external controller controls the pump and/or comprising an integrated controller controlling the pump

## Patentansprüche

1. Zentralströmungs-Doppelmembranpumpe, die als Energiequelle verwendet wird, wobei eine druckbeaufschlagte Betriebsflüssigkeit durch den zentralen Teil strömt und zwei externe Seitenkammern (1,2) beinhaltet, die jeweils eine der folgenden sind Kammer mit einer Membran (4), die eine äußere Betriebsflüssigkeitskammer (1.1, 2.1) von einer inneren Kammer mit gepumpter Betriebsflüssigkeit (1.2, 2.2) trennt; die Pumpe umfasst: einen zentralen Pumpenkörper, der (3) umfasst: zwei konkave Seiten, die jeweils eine Innenseite der jeweiligen Kammern mit gepumpten Betriebsflüssigkeiten begrenzen; einen Einlasskrümmer (16) als integralen Bestandteil des zentralen Pumpenkörpers (3) zum Einführen von Betriebsflüssigkeiten in die Pumpe; einen Auslasskrümmer (17) als integralen Bestandteil der zentralen Pumpe Gehäuse zum Abgeben von Flüssigkeit aus der Pumpe; eine Welle innerhalb einer Buchse, die zwischen den Zentren der konkaven Seiten des zentralen Pumpenkörpers verläuft; zwei Einlassöffnungen (12) für gepumpte Betriebsflüssigkeit und zwei Auslassöffnungen (13) für gepumpte Betriebsflüssigkeit, jeweils eine davon innerhalb jeder der beiden Pumpenkammern, und sich die Einlassöffnungen auf einer anderen Höhe als die Auslassöffnungen befinden, wobei sich die Einlassöffnungen über dem Einlasskrümmer und die Auslassöffnungen unter dem Auslasskrümmer befinden; zwei Saugrückschlagventile (10)
- Gehäuse zwischen den gepumpten Betriebsflüssigkeitskammern, die jeweils ein Saug-Rückschlagventil beinhalten, und die Saug-Rückschlagventile sich oberhalb der Welle (6) befinden und der Einlasskrümmer mit dem Eingang jedes Saug-Rückschlagventilgehäuses und mit einer unmittelbaren Verbindung vom Ausgang jedes Saug-Rückschlagventilgehäuses zur jeweiligen Einlassöffnung für gepumpte Betriebsflüssigkeit verbunden ist, und zwei Auslass-Rückschlagventilgehäuse (11) zwischen den gepumpten Flüssigkeitskammern, jeweils mit einem Auslauf-Rückschlagventil; die Auslauf-Rückschlagventile befinden sich unterhalb der Welle und ist mit einer sofortigen Verbindung von jeder gepumpten Betriebsflüssigkeitsauslassöffnung zum Eingang des jeweiligen Auslauf-Rückschlagventilgehäuses und der Ausgang jedes der Auslauf-Rückschlagventilgehäuse mit dem Auslaufverteiler verbunden; zwei Rückschlagventil-Zugangskappen (15), wobei die Ventile unabhängig sind von: den Verbindungen zwischen dem Einlaufverteiler und dem Saug-Rückschlagventil
- Gehäuse und den Verbindungen zwischen den Druckrückschlagventilgehäusen und dem Auslasskrümmer und den Verbindungen zwischen den Einlassöffnungen für gepumpte Betriebsflüssigkeit und den Rückschlagventilgehäusen für gepumpte Betriebsflüssigkeit und den Verbindungen zwischen den Rückschlagventilgehäusen für gepumpte Betriebsflüssigkeit und den Auslassöffnungen für gepumpte Betriebsflüssigkeit; zwei Kammerdeckel, die jeweils eine Außenseite der jeweiligen Betriebsflüssigkeitskammern begrenzen, jeweils unabhängig vom anderen Kammerdeckel (14), unabhängig vom Einlasskrümmer und unabhängig vom Auslasskrümmer; jeder Kammerdeckel umfasst: einen Betriebsflüssigkeitskrümmer, der die Betriebsflüssigkeit zwischen einem Betriebsflüssigkeitsverteilungsmodul (7) und der jeweiligen Betriebsflüssigkeitskammer transportiert; eine Drosselklappe (9), die in einem Einlass angeordnet ist, wobei der Einlassleitstrom in einen der Betriebsflüssigkeitskrümmer aus dem Betriebsflüssigkeitsverteilungsmodul fließt, und eine Sensorklappe (5) konfiguriert, um ein Ende der Hubstellung der jeweiligen Membran zu erfassen, wenn sie ihre äußerste Position erreicht, und um am Ende des Hubs einen Betriebsflüssigkeitsimpuls über den jeweiligen Betriebsfluidverteiler an das Verteilermodul zu senden; das Modul zur Betriebsflüssigkeitsverteilung, das über dem zentralen Pumpenkörper angeordnet ist, mit beiden Kammerdeckeln verbunden ist und ein drehbares Dichtungselement (8) beinhaltet, wobei sich das drehbare Dichtungselement in einer horizontalen Ebene, alternativ im Uhrzeigersinn und gegen den Uhrzeigersinn, an einer Stelle eines Betriebsflüssigkeitsstroms in das Betriebsflüssigkeitsverteilungsmodul dreht, und die drehbare Dichtung umfasst: einen vorstehenden Flügel (8.5); einen Einlassdichtungszylinder mit einer kreisförmigen Dichtlippe (8.1) auf jeder der beiden kreisförmigen Seiten des Zylinders, die konfiguriert ist, um die Verbindung der Betriebsflüssigkeit zwischen dem Betriebsflüssigkeitsverteilungsmodul und alternativ über die jeweiligen Kammerdeckel-Betriebsflüssigkeitsverteiler, jede der Betriebsflüssigkeitskammern und einen Vorsprung (8.2) zu überwachen: mit einer abgeschnittenen kugelförmigen Oberfläche, getragen von einem drehbaren, reibungsarmen Dichtungselement (8.3) in der Mitte des Betriebsflüssigkeitsverteilungsmoduls und zwei Membranen, die jeweils umfassen: ein wellenförmiges Profil, das sich dem Profil der Kammerdeckeln anpasst, während die Membranen einen Saughub zu den Kammerdeckeln ausführen, und das sich den konkaven Seiten des zentralen Pumpenkörpers anpasst, während die Membranen einen Auslaufhub zum zentralen Pumpenkörper durchführen, und ein Flanschdichtwulst, der das Austreten von gepumpter Betriebsflüssigkeit und Betriebsflüssigkeit zwischen den Kammerdeckeln und dem zentralen Pumpenkörper verhindert.

2. Eine Pumpe nach Anspruch 1, wonach das Betriebsflüssigkeitsverteilungsmodul umfasst: einen Betriebsflüssigkeitseinlasshohlraum mit zwei Betriebsflüssigkeitseinlassöffnungen, die jeweils auf beiden Seiten der Betriebsflüssigkeit angeordnet sind, einen Betriebsflüssigkeitseinlasshohlraum und einen Betriebsflüssigkeitsauslasshohlraum, der zwei Betriebsflüssigkeitsauslassöffnungen auf beiden Seiten des Betriebsflüssigkeitsauslasshohlraums umfasst, und worin das drehbare Dichtungselement des Betriebsflüssigkeitsverteilungsmoduls ein drehbares, reibungsarmes Dichtungselement ist, worin der hervorstehende Flügel des drehbaren Dichtungselements eine Spitze beinhaltet, die dem Strom der Betriebsflüssigkeit in den Betriebsflüssigkeitseinlasshohlraum zugewandt ist, mit der Spitze einer Fase auf einer langen Seite eines rechteckigen Abschnitts davon, der dem Betriebsflüssigkeitsstrom zugewandt ist, so dass, wenn Betriebsflüssigkeit in den Betriebsfluideinlasshohlraum strömt, das drehbare Dichtungselement nicht in einer zentralen Position innerhalb des Betriebsfluidverteilungsmoduls ausgewuchtet wird; die Dichtlippe auf jeder kreisförmigen Seite des Einlassdichtungszylinders des drehbaren Dichtungselements konfiguriert ist, um den Durchfluss von Betriebsflüssigkeit in eine der Betriebsflüssigkeitseinlassöffnungen bei geschlossener Dichtung zu ermöglichen die andere Einlassöffnung; der Vorsprung des drehbaren Dichtungselements gegen die Dichtung mit geringer Reibung, die in der Mitte des Betriebsflüssigkeitsverteilungsmoduls angeordnet ist, so dass verhindert wird, dass das Betriebsflüssigkeit direkt aus dem Betriebsflüssigkeitseinlasshohlraum in den Betriebsflüssigkeitsauslasshohlraum fließt und das drehbare Dichtungselement zusätzlich einen Auslassdichtungszylinder mit einer Dichtlippe auf jeder kreisförmigen Seite des Auslassdichtungszylinders umfasst, konfiguriert, um den Durchfluss von Betriebsflüssigkeit aus einer der Auslassöffnungen der Betriebsflüssigkeit zu ermöglichen, während die andere Auslassöffnung geschlossen ist.

3. Die Pumpe nach Anspruch 1, worin das Sensorventil umfasst: ein Sensorchassis; eine Dichtung; einen Betätigungsknopf; einen Kugelventilsitz; eine O-Ring-Dichtung und ein Kugelventil, und eine der Kammerdeckel beinhaltet eine Drosselklappe in einem Kanal ihres Betriebsflüssigkeitsverteilers, die vom entsprechende Betriebsflüssigkeitseinlassöffnung des Betriebsflüssigkeitsverteilungsmoduls in die entsprechende Betriebsflüssigkeitskammer; das Betriebsflüssigkeitsverteilungsmodul, die Kammerdeckel-Betriebsflüssigkeitsverteiler und die Sensorklappen sind konfiguriert, um zu ermöglichen, dass die druckbeaufschlagte Betriebsflüssigkeit konstant auf die Sensorklappen wirkt; jede Sensorklappe ist konfiguriert, um sich zu öffnen, wenn die Membran auf der gleichen Seite der Pumpe wie das Sensorklappe liegt und
Ihr Hubende in Richtung des Sensorventils erreicht; jedes Sensorventil und der Kammerdeckel-Betriebsflüssigkeitsverteiler im Kammerdeckel, einschließlich des Sensorventils und des Betriebsflüssigkeitsverteilungsmoduls sind so konfiguriert, dass die Betriebsflüssigkeit beim Öffnen des Sensorventils vom Sensorventil durch den Kammerdeckel-Betriebsflüssigkeitsverteiler und zum Betriebsflüssigkeitsverteilungsmodul fließen kann, um eine Impulskraft auf die Seite des Einlasses auszuüben Dichtungszylinder auf der gleichen Seite der Pumpe wie die Sensorklappe, um das drehbare Dichtungselement in eine andere Position zu versetzen; und die Drosselklappe ist so konfiguriert, dass sie die Funktion des drehbaren Dichtungselements durch Brechen einer symmetrischen Funktion der Pumpe verstärkt und so verhindert, dass das drehbare Dichtungselement und damit die Pumpe stoppt oder blockiert.

4. Die Pumpe aus Anspruch 1, wonach die beiden Saug-Rückschlagventilgehäuse und die beiden Auslauf-Rückschlagventilgehäuse Gehäuseöffnungen in den oberen Enden der Rückschlagventilgehäuse und eine abnehmbare Zugangskappe umfassen und die beiden Saug-Rückschlagventilgehäuseöffnungen und eine zweite abnehmbare Zugangskappe und die beiden Auslauf-Rückschlagventilgehäuseöffnungen abdichten.

5. Die Pumpe aus Anspruch 1, wonach in jeder Pumpflüssigkeitskammer die Einlassöffnung der Pumpflüssigkeitskammer oberhalb der Welle in Richtung der oberen Peripherie der Flüssigkeitskammer und die Auslassöffnung unterhalb des Wellenauslasskrümmers und in Richtung der unteren Peripherie der Flüssigkeitskammer liegt und die Einlass- und Auslassöffnung einander diagonal gegenüberliegen, um zu gewährleisten, dass die Betriebsflüssigkeit von oben nach unten und aus den Kammern fließt, wodurch Zonen mit Null und sehr geringer Strömungsgeschwindigkeit entfallen, in denen es sonst zu Sedimentation in den Kammern mit der gepumpten Betriebsflüssigkeit kommen könnte.

6. Pumpe aus Anspruch 1, mit den Gehäusen der vier Rückschlagventile im Falle der Saugventile - wobei die Einlassöffnungen der Pumpflüssigkeitskammer oberhalb der Welle und im Falle der Auslassventile die Auslassöffnungen der Pumpflüssigkeitskammer unterhalb der Welle angeordnet sind - und so die Notwendigkeit von Betriebsflüssigkeitskrümmern zwischen den Prüföffnungen und den Ein- und Auslassöffnungen der Kammer entfällt.

7. Die Pumpe aus Anspruch 1, wonach die beiden Saug-Rückschlagventilgehäuse und die beiden Auslauf-Rückschlagventilgehäuse Gehäuseöffnungen in den oberen Enden der Rückschlagventilgehäuse aufweisen; eine abnehmbare Zugangskappe schließt und dichtet die beiden Saug-Rückschlagventilgehäuse- Öffnungen ab und eine zweite abnehmbare Zugangskappe umschließt und dichtet die beiden Öffnungen des Rückschlagventilgehäuses ab, und die Zugangskappen sind unabhängig von den Verbindungen zwischen den Einlass- und Auslasskrümmern und den Rückschlagventilgehäusen und unabhängig von den Verbindungen zwischen den Einlass- und Auslassöffnungen des Fördermediums und den Rückschlagventilgehäusen, um den Zugang zu den Rückschlagventilgehäusen und den Rückschlagventilen zu ermöglichen, und zwar ohne entweder den Einlass- oder den Auslasskrümmer von Schläuchen oder Leitungen zu trennen, die mit der Pumpe verbunden sind, und zwar ohne den Einlass- oder den Auslasskrümmer der Pumpe zu demontieren.

8. Die Pumpe aus Anspruch 1 umfasst zwei unabhängige Ansaugeinlässe, wobei ein Ansaugeinlass mit jeder der beiden gepumpten Betriebsflüssigkeitskammern verbunden ist.

9. Die Pumpe aus Anspruch 1, in der die Membranen elastische Membranen und nicht an der Welle befestigt sind und jede Membran so konfiguriert ist, dass sich die Membran am Ende eines Saughubs in einem entspannten Zustand befindet und die Membran während ihrer Verformung während eines Druckhubs elastische Energie speichert und die Membran den Saughub durch die Rückgabe von elastischer Energie während eines Saughubs unterstützt.

10. Die Pumpe nach Anspruch 1, wonach die Kammerabdeckungen unabhängig von Ein- und Auslassmembranen sind.

11. Pumpe nach Anspruch 1, wonach eine automatische externe Steuerung die Pumpe steuert und/oder eine integrierte Steuerung umfasst, die die Pumpe steuert

## Revendications

1. Une pompe à double membrane à débit central utilisant comme source d'énergie un fluide de service sous pression s'écoule à travers la partie centrale et comprend deux chambres latérales externes (1, 2), chaque chambre comprenant une membrane (4) séparant une chambre extérieure de fluide de service (1.1, 2.1) d'une chambre intérieure de fluide pompé (1.2, 2.2), la pompe comprenant : un corps de pompe central (3) comprenant : deux côtés concaves délimitant chacun un côté intérieur des chambres de fluide pompé respectives ; un collecteur d'entrée (16), en tant que partie intégrante du corps de pompe central (3), pour introduire du fluide dans la pompe ; un collecteur de sortie (17), en tant que partie intégrante du corps de la pompe centrale, pour évacuer le fluide de la pompe ; un arbre, à l'intérieur d'une douille, s'étendant entre les centres des côtés concaves du corps de pompe central ; deux orifices d'entrée de fluide pompé (12) et deux orifices de sortie de fluide pompé (13), un de chaque dans chacune des deux chambres de fluide pompé, les orifices d'entrée étant à une hauteur différente des orifices de sortie, les orifices d'entrée se trouvant au-dessus du collecteur d'entrée et les orifices de sortie au-dessous du collecteur de sortie ; deux boîtiers de clapets anti-retour à aspiration (10) entre les chambres de fluide pompé, comprenant chacun un clapet anti-retour d'aspiration, ces derniers se trouvant au-dessus de l'arbre (6), et le collecteur d'admission étant relié à l'entrée de chaque boîtier de clapet anti-retour d'aspiration et avec une liaison immédiate entre la sortie de chaque boîtier de clapet anti-retour d'aspiration et l'orifice d'entrée du fluide pompé correspondant, et deux logements de clapets anti-retour de refoulement (11), entre les chambres du fluide pompé, comprenant chacun un clapet anti-retour de refoulement se trouvant en dessous de l'arbre, et avec une connexion immédiate de chaque orifice de sortie du produit pompé à l'entrée du boîtier de clapet anti-retour de refoulement respectif et avec la sortie de chacun des boîtiers de clapets anti-retour de refoulement relié au collecteur de sortie ; deux bouchons d'accès (15) pour clapet anti-retour, les valves étant indépendantes : des connexions entre le collecteur d'admission et les boîtiers des clapets anti-retour d'aspiration et les raccords entre les boîtiers des clapets anti-retour de refoulement et le collecteur de sortie, ainsi que les raccords entre les orifices d'entrée du produit pompé et les boîtiers des clapets anti-retour d'aspiration et les raccords entre les boîtiers des clapets anti-retour d'aspiration et les orifices de sortie du produit pompé ; deux couvercles de chambres délimitant chacun un côté extérieur des chambres respectives des produits de service et chacun fixé au corps central de la pompe indépendamment de l'autre couvercle de chambre (14), indépendamment du collecteur d'entrée et du collecteur de sortie, dans lequel chaque couvercle de chambre comprend : un collecteur de fluide de service communiquant le fluide de service entre un module de distribution de fluide de service (7) et la chambre de fluide de service respective ; un clapet étrangleur (9) disposé dans une entrée, le flux de guidage d'entrée dans un des collecteurs de fluide de service depuis le module de distribution de fluide, et une vanne avec capteur (5) configurée pour détecter une position de fin de course de la membrane respective lorsqu'elle atteint sa position la plus à l'extérieur et pour envoyer en fin de course une impulsion de fluide de service au module de distribution via le collecteur de fluide de service respectif ; le module de distribution de fluide de service disposé au-dessus du corps de pompe central, relié aux deux couvercles de chambre et comprenant un élément d'étanchéité pivotant (8), l'élément d'étanchéité pivotant tournant, sur un plan horizontal, de manière alternative dans le sens horaire et dans le sens antihoraire, à un emplacement d'écoulement de fluide de service dans le module de distribution de fluide de service, et l'élément d'étanchéité pivotant comprenant : une aile saillante (8.5) ; un cylindre d'étanchéité d'entrée avec un bord d'étanchéité circulaire (8.1) sur chacun des deux côtés circulaires du cylindre configuré pour commander la communication du fluide de service entre le module de distribution de ce dernier et, sinon via les collecteurs de fluide de service respectifs, chacune des chambres du fluide de service et une saillie (8.2) ayant une surface sphérique tronquée et étant supportée par un joint à faible frottement (8.3) logé au centre du module de distribution de fluide de service, pivotant contre ce dernier et assurant son étanchéité et deux membranes comprenant chacune : un profil ondulé qui s'adapte au profil des couvercles de la chambre lorsque les membranes complètent une course d'aspiration vers les couvercles de chambre et qui s'adaptent aux côtés concaves du corps central de pompe lorsque les membranes complètent une course de refoulement vers le corps central de pompe, et un bourrelet d'étanchéité de la bride empêchant le fluide pompé et le fluide de service de s'écouler entre les couvercles de la chambre et le corps central de pompe.

2. La pompe de la réclamation 1, dans laquelle le module de distribution de fluide de service comprend : une cavité d'entrée de fluide de service comprenant deux orifices d'entrée de ce dernier, l'un de chaque côté du module de distribution du fluide et une cavité d'entrée de fluide, une cavité de sortie de fluide de service comprenant deux orifices de sortie de fluide de service de chaque côté de la cavité de sortie de ce fluide, dans laquelle l'élément d'étanchéité pivotant du module de distribution de fluide de service est un élément d'étanchéité pivotant à faible friction, l'aile en saillie de l'élément d'étanchéité pivotant comprenant une pointe tournée vers l'écoulement du fluide de service à l'entrée du fluide de service, cette pointe présentant sur un côté longitudinal d'une section rectangulaire correspondante faisant face à l'écoulement du fluide de service, de telle sorte que lorsque le fluide de service s'écoule dans la cavité d'entrée de ce dernier, l'élément d'étanchéité pivotant n'est pas équilibré dans une position centrale dans le module de distribution du fluide ; dans lequel le bord d'étanchéité sur chaque côté circulaire du cylindre d'étanchéité d'entrée de l'élément d'étanchéité pivotant est conçue pour permettre le passage du fluide de service dans l'une des entrées de ce dernier, tout en fermant hermétiquement l'autre orifice d'entrée ; dans lequel la saillie de l'élément d'étanchéité pivotant ferme le joint à faible frottement situé au centre du module de distribution de fluide de service de sorte que le fluide de service ne puisse pas s'écouler directement de la cavité d'entrée du fluide de service vers la cavité de sortie du fluide et dans lequel l'élément d'étanchéité pivotant comprend également un cylindre de sortie étanche avec un bord d'étanchéité sur chaque face circulaire du cylindre de sortie d'étanchéité configuré pour permettre le passage du fluide de service en dehors de l'un des orifices de sortie du fluide de service tout en fermant hermétiquement l'autre orifice de sortie.

3. Le pompe de la réclamation 1, dans laquelle la vanne munie d'un capteur comprend : un châssis à capteur, un joint d'étanchéité, un bouton d'actionnement, un boîtier de vanne à bille, un joint torique et un robinet à bille. De plus, l'un des couvercles de chambre comprend un robinet d'étranglement dans un canal de son collecteur de fluide de service menant de l'orifice d'entrée de fluide de service correspondant du module de distribution de fluide de service à la chambre de fluide de service correspondante, le module de distribution de fluide de service, les collecteurs de fluide de service du couvercle de la chambre et les vannes à capteurs étant configurées pour permettre au fluide de service sous pression d'agir constamment sur les vannes à capteurs ; chaque vanne à capteur est configurée pour s'ouvrir lorsque la membrane du même côté de la pompe lorsque la vanne à capteur atteint sa fin de sa course vers la vanne à capteur ; chaque vanne à capteur et le collecteur de fluide de service du couvercle de la chambre, y compris la vanne à capteur et le module de distribution du fluide de service, sont configurés pour permettre au fluide de service de circuler, lorsque la vanne à capteur est ouverte, depuis la vanne à capteur à travers le collecteur du fluide de service du couvercle de la chambre, et vers le module de distribution du fluide de service pour appliquer une force impulsionnelle au côté du cylindre d'étanchéité d'entrée du même côté de la pompe que la vanne à capteur, pour faire changer la position de l'élément d'étanchéité pivotant ; et le robinet d'étranglement est configuré pour renforcer le fonctionnement de l'élément d'étanchéité pivotant en cassant un fonctionnement symétrique de la pompe empêchant ainsi l'élément d'étanchéité pivotant et donc la pompe de s'arrêter ou de caler.

4. La pompe de la réclamation 1, dans laquelle les deux boîtiers de clapets anti-retour d'aspiration et les deux boîtiers de clapets anti-retour de refoulement comportent des ouvertures de boîtier aux extrémités supérieures des boîtiers de clapets anti-retour et un couvercle d'accès amovible ferme hermétiquement les deux ouvertures de boîtiers de clapets anti-retour d'aspiration et un deuxième couvercle d'accès amovible ferme hermétiquement les deux ouvertures des boîtiers de clapets anti-retour de refoulement.

5. La pompe de la réclamation 1, dans laquelle, à l'intérieur de chaque chambre de fluide pompé, l'orifice d'entrée de la chambre de fluide pompé se trouve au-dessus de l'arbre vers la périphérie supérieure de la chambre de fluide et l'orifice de sortie se trouve au-dessous du collecteur de sortie de l'arbre et vers la périphérie inférieure de la chambre de fluide. En outre, les orifices d'entrée et de sortie sont opposés l'un à l'autre, de manière à assurer un écoulement du fluide du haut vers le bas et à l'extérieur des chambres, éliminant ainsi les zones de vitesse d'écoulement nulle et très faible où la sédimentation pourrait autrement se produire dans les chambres à fluide pompé.

6. La pompe de la réclamation 1, dans laquelle les boîtiers des quatre clapets anti-retour forment, dans le cas des soupapes d'aspiration, les orifices d'entrée de la chambre de fluide pompé situés au-dessus de l'arbre et forment, dans le cas des soupapes de refoulement, les orifices de sortie de la chambre de fluide pompé situés au-dessous de l'arbre, éliminant ainsi le besoin de collecteurs entre les clapets anti-retour et les orifices d'entrée et de sortie de la chambre du fluide pompé.

7. La pompe de la réclamation 1, dans laquelle les deux boîtiers de clapets anti-retour d'aspiration et les deux boîtiers de clapets anti-retour de refoulement comportent des ouvertures aux extrémités supérieures des boîtiers de clapets anti-retour ; un couvercle d'accès amovible ferme hermétiquement les deux ouvertures des corps de clapets anti-retour d'aspiration et un deuxième capuchon d'accès amovible ferme hermétiquement les deux ouvertures des boîtiers de clapets anti-retour, et les capuchons d'accès sont indépendants des connexions entre les collecteurs d'entrée et de sortie et les boîtiers de clapets anti-retour et sont indépendants des connexions entre les orifices d'entrée et de sortie du fluide pompé et des boîtiers de clapets anti-retour, pour permettre un accès sans déconnecter le collecteur d'entrée ni le collecteur de sortie, à partir de tuyaux ou de conduits raccordés à la pompe et sans démonter le collecteur d'entrée ni le collecteur de sortie de la pompe.

8. La pompe de la réclamation 1, comprenant deux entrées d'aspiration indépendantes, une entrée d'aspiration raccordée à chacune des deux chambres du fluide pompé.

9. La pompe de la réclamation 1, dans laquelle les membranes sont élastiques et ne sont pas fixées à l'arbre et dans laquelle chaque membrane est configurée de telle sorte que la membrane se trouve dans un état détendu à la fin d'une course d'aspiration, stocke de l'énergie élastique au cours de sa course de refoulement et assiste une course d'aspiration en rendant l'énergie élastique lors de la course d'aspiration.

10. La pompe de la réclamation 1, dont les couvercles des chambres sont indépendants des collecteurs d'entrée et de sortie.

11. La pompe de la réclamation 1, dans laquelle un contrôleur automatique externe commande la pompe et/ou comprend un contrôleur intégré commandant la pompe
